# EUROPEAN PATENT APPLICATION

(11) **EP 4 657 235 A1**
(43) Date of publication of application: **03.12.2025**
(21) Application number: 24178228.3
(22) Date of filing: 27.05.2024
(51) Int. Cl.: G06F 3/12

(54) **SYSTEMS AND METHODS FOR CAMERA INSPECTION OF PRINTED PRODUCTS HAVING VARIABLE DATA**

(71) Applicant: Esko Software BV, 9051 Ghent (BE)
(72) Inventor: Plettinck, Lieven, CH-8105 Regensdorf (CH); Ben-Ezra, Barry, CH-8105 Regensdorf (CH)
(74) Representative: Jonas, Hans-Hermann

(57) **Abstract**

A method for causing a visual inspection system to inspect a printed product containing variable data printing (VDP) content printed by a printing system. A print product design system connected to the visual inspection system and the printing system is configured with a print product design file in a page description language defining the printed product. The product design file is modified to define a VDP template with a VDP area having at least one VDP object and a static area not containing any VDP content. Metadata added to the VDP object defines at least a location, size, and VDP object type. An inspection data package comprising information corresponding to the modified product design file is generated and transmitted to the visual inspection system including data usable by the inspection system for locating and inspecting the VDP area in each of the plurality of printed instances.

## Description

### BACKGROUND OF THE INVENTION

Camera inspection systems for printed products (labels, flexible packaging, folding cartons, and the like, without limitation), such as those made by AVT Ltd. of Hod HaSharon, Israel, and many others, generally work capturing a first image of the printed product with the camera at the start of printing, comparing that captured first image to a digital master image (e.g. a rendered result of the portable document file (PDF) with the graphics of the printed product, approved by the print-buyer), and if there are no significant differences between the first captured image and the digital master, this first image becomes a master reference image. The purpose of this comparison is to see if the first captured image is a faithful reproduction of the print-buyers intent. The comparison can be purely visual by the press operator; it can be fully automatic; or it can be a human visual comparison with computer assistance e.g. highlighting differences. During the printing process, captured images of instances of the printed product are compared to the master reference image, and if the difference between the captured image and the master reference image is not significant, the printed instance is approved. If there are significant differences between the printed instance and the master reference image, the printed instance is identified as defective. Typically, further analysis is done to classify the identified defect into one of a variety of different categories of print defects.

Camera inspection systems usually also have the ability to divide and classify the master reference image into distinct inspection areas, such as areas containing a barcode, text, logos, images, etc. Within each distinct inspection area, more specialized algorithms can be used. For example, code grading algorithms can be used that measure the readability of the code (e.g. barcodes, QR codes, etc.) at the cashier's desk.

The description above is valid for static printed products, where all printed copies are identical. Some inspection systems also support printed products with variable data (e.g. serialized numbering or barcodes). In such systems areas are defined where the printed content will be different from copy to copy, so that differences in those areas are not flagged as printing defects. Specialized algorithms (e.g. OCR reading of numbers) can be used within these areas to check the content of these variable data areas against various general rules (e.g. guaranteeing uniqueness of numbers).

Establishing these inspection areas manually by a human operator on the camera system at the start of the print job takes time and material on the press. During this time, instances may be printed without inspection, which may be problematic, especially for short production runs. To increase the uptime of the press and reduce the material waste, definition of such areas can be automated. For example, Esko^{®} AutoSet^{™} software eliminates setup of the inspection system by reusing data, prepared by the prepress department for printing purposes, and uses analysis of the PDF of a printed product to detect text and barcode areas. Esko^{®} iCenter^{™} software uses AI algorithms to detect text and barcode areas in images.

While the foregoing state of the art systems, operable to automate the setup of the inspection system using the prepress PDF of the printed product, work well for static printed products, because the PDF of the static printed product is a faithful digital representation of all of the printed instances, application of these systems to printed products with variable data (e.g. serialized numbering) creates challenges, as there is no faithful digital representation in prepress that includes each of the intended differences from instance to instance (e.g. different unique printed serial numbers), meaning that those differences would be flagged as print defects.

US9454705B2, titled "METHOD AND SYSTEM FOR INSPECTING VARIABLE-DATA PRINTING," incorporated herein by reference, describes an approach for inspecting printed instances having both static data and variable data, using a first rasterized image for inspecting identified static areas, and using a selected one of a plurality of rasterized images for inspecting the identified variable data areas. The rasterized image corresponding to the full page to be inspected is divided into multiple non-overlapping areas (i.e. "tiles") in accordance with a division map, the non-overlapping areas including one or more tiles that are entirely static, and one or more tiles having at least one variable element. A prestored data structure indicates which areas are static area and which have variable data, and rasterized images are retrieved from a memory according to the indication and compared to the corresponding area of the captured image to detect printing defects in that area. Such an inspection system requires storage and retrieval of numerous tiles of the static and dynamic rasterized image tiles for inspection, and is best suited to systems that already create such rasterized tiles as part of the digital front end of a printing system.

Accordingly, there is a need in the art for systems and methods for camera inspection of printed products having variable data.

### SUMMARY OF THE INVENTION

One aspect of the invention relates to a method for visually inspecting with a visual inspection system a printed product containing variable data printing (VDP) content printed by a printing system as part of a print job. The method includes providing a computerized print product design system comprising at least a design computer processor, computer memory connected to and readable by the design computer processor, a user interface, and a communications connection to the visual inspection system and the printing system. A computer-readable print product design file, provided in a page description language and stored in the computer memory, contains information defining the printed product. The method includes using the user interface of the computerized print product design system to modify the product design file to define at least one VDP template defining at least one VDP area containing VDP content comprising at least one VDP object and at least one static area not containing any VDP content. The modification includes adding metadata to at least one VDP object defining at least a location, size, and VDP object type. The modified product design file identifies the at least one VDP area and the at least one static area stored in the computer memory of the computerized print product design system. The print product design system generates and sends an inspection data package comprising information corresponding to the modified product design file to the visual inspection system, where it is stored in the computer memory of the visual inspection system. The data package includes data usable by the visual inspection system for locating and inspecting the at least one VDP area in each of the plurality of printed instances. In embodiments, the step of sending the data package may be performed without any human intervention.

Embodiments of the invention further include providing the printing system configured to deposit ink in one or more desired patterns on a substrate material, in communication with the design computer processor or in communication with a raster image processor (RIP) system configured to convert information in the modified design file to information readable by a controller of the printing system. The print product design system generates and sends a printing data package to the printing system and the printing system prints the printing job comprising a plurality of printed instances of the printed product on the substrate material in accordance with the printing data package. In embodiments, the printing system may comprise a hybrid printing system having a first printing system component for printing the static content and a second printing system component for printing the VDP content.

Embodiments also include providing the visual inspection system in communication with the design computer, the visual inspection system comprising at least a camera, an inspection computer processor, and computer memory connected to and readable by the inspection computer processor. The visual inspection system is positioned to capture one or more images of a plurality of printed instances of the printed product printed by the printer. The method in such embodiments includes configuring the visual inspection system to capture the one or more images of the plurality of printed instances of the printed product as printed by the printing system and implementing a first inspection algorithm in the at least one static area and a second inspection algorithm in the at least one VDP area. The visual inspection system captures the one or more images of the plurality of printed instances of the printed product as printed by the printing system, receives the inspection data package from the print product design system defining the at least one static area and the at least one VDP area, and implements the first inspection algorithm in the at least one static area and the at least one second inspection algorithm in the at least one VDP area. The second inspection algorithm may be performed without reference to a captured master image.

In embodiments, the at least one second inspection algorithm optionally includes at least one inspection parameter based upon the metadata. In embodiments, the metadata further includes information selected from the group consisting of one or more rules defining color of the at least one VDP area, and one or more rules defining content of the at least one VDP area. The design file may be a PDF, wherein the step of modifying the design file includes inserting a PDF object corresponding to the at least one VDP area.

Embodiments of the method further include creating an imposition specification defining a print layout comprising the plurality of printed instances and sending the imposition specification to the visual inspection system and to the printing system. In embodiments, the data package may further comprises at least one VDP database, a layout specification, a sequencing specification, a specification of blocks and empty cells or roll headers between blocks, or any combination of the foregoing. The data package may correspond to a plurality of VDP inspection templates, optionally wherein the print job comprises a ganged job, optionally wherein the ganged job includes at least one VDP product and at least one static product.

Another aspect of the invention relates to a system for visually inspecting a printed product containing variable data printing (VDP) content. The system comprises a printing system configured to print a plurality of instances of the printed product, each instance containing at least one area of the VDP content and a visual print inspection system comprising at least one camera positioned to capture an image of each instance of the printed product. At least one inspection computer processor is connected to inspection computer memory and the print inspection system. Instructions stored in the inspection computer memory media include information defining at least one VDP area of the printed product containing VDP content and at least one static area of the printed product not containing VDP content, the information defining the at least one VDP area defining at least one VDP object and metadata defining at least a location, size, and type of the VDP object. The inspection computer processor is configured to implement a first inspection algorithm in the at least one static area and implement a second inspection algorithm in the at least one VDP area, optionally wherein the instructions for implementing the second inspection algorithm include instructions based upon the defined metadata.

Embodiments of the invention further include at least one design computer processor in communication with the at least one inspection computer processor, the at least one design computer processor connected to a user interface and design computer memory media having machine-readable instructions stored therein for modifying a computer-readable product design file in accordance with commands received from the user interface. The computer-readable product design file comprises a file in a page description language (PDL) defining the printed product. The instructions for modifying include instructions for defining the at least one VDP area, the at least one static area, and the metadata associated with the at least one VDP area. The at least one design computer processor is configured to generate and send an inspection data package to the inspection computer processor corresponding to the modified product design file defining the at least one VDP area including the at least one VDP object, the at least one static area, and the metadata.

Yet another aspect of the invention relates to a non-transitory computer memory media comprising machine-readable instructions readable by a processor associated with a print product inspection system. The instructions are configured to cause the print product inspection system to receive a data package comprising information corresponding to a print product design file usable by the visual inspection system for locating at least one variable data printing (VDP) area containing at least one VDP object and at least one static printed area in one or more captured images of each of the plurality of printed instances, the data package including metadata identifying at least a location, size, and VDP object type. The instructions are also configured to configure the visual inspection system to capture the one or more images of the plurality of printed instances of the printed product as printed by the printer and implement a first inspection algorithm in the at least one static area and a second inspection algorithm in the at least one VDP area. The instructions are further configured to capture the one or more images of each of the plurality of printed instances of the printed product in a workflow of printed output from a printer and implement the first inspection algorithm in the at least one static area and implement the second inspection algorithm in the at least one VDP area.

Yet another aspect of the invention relates to a non-transitory computer memory media comprising machine-readable instructions readable by a processor associated with a computerized print product design system. The instructions are configured to cause the print product design system to receive a product design file in a page description language (PDL), to modify the product design file to define at least one variable data printing (VDP) area containing VDP content comprising at least one VDP object and at least one static area not containing VDP content, and to add metadata including information defining at least a location, size, and VDP object type, thereby creating a modified product design file. The instructions further include instructions for sending a data package comprising information corresponding to the modified product design file to the visual inspection system, the data package usable by the visual inspection system for locating the at least one VDP area in each of the plurality of printed instances. The instructions may optionally include creating an imposition file defining a print layout comprising a plurality of printed instances of the product design file comprising the VDP content and sending information corresponding to the imposition file to the visual inspection system. The instructions may also optionally include instructions for causing the computerized print product design system to send the product design file or imposition file to a printer or to a raster image processor (RIP) connected to the printer.

### BRIEF DESCRIPTION OF THE DRAWINGS

FIG. 1A is a schematic side view of an exemplary printing workflow featuring a print product visual inspection system.
FIG. 1B is a schematic plan view of the exemplary printing workflow of FIG. 1A.
FIG. 1C is a schematic diagram of an exemplary print product visual inspection system.
FIG. 1D is a schematic diagram of an exemplary print product design system.
FIG. 2A is a flowchart depicting an exemplary method in accordance with one aspect of the invention.
FIG. 2B is a flowchart depicting an exemplary method portion in accordance with another aspect of the invention.
FIG. 2C is a flowchart depicting an exemplary method portion in accordance with still another aspect of the invention.
FIG. 3 depicts exemplary content displayed on a screen of an exemplary display embodying user interface, depicting a product design file and a user interface for modifying the same in accordance with an aspect of the invention.
FIG. 4 schematically depicts a VDP expansion step associated with an aspect of the invention.
FIG. 5 schematically depicts a layout or imposition step associated with an aspect of the invention.
FIG. 6 schematically depicts an exemplary print product design template showing a bounding box that corresponds to a VDP content area.

### DETAILED DESCRIPTION OF THE INVENTION

In an exemplary method, implemented by a computer, and systems including a processor configured to read non-transitory computer memory media programmed with machine-readable language for executing the method, an interactive design application is configured to add graphical objects to a page description language (PDL) file, such as a PDF, containing the static design content (e.g. graphics, text, codes, etc.) corresponding to the printed product. Although the examples referenced herein all refer to PDFs, it should be understood that the invention is not limited to any particular PDL file and may be applied any PDL file known in the art or to a new and/or proprietary PDL file format. Metadata is added to certain graphical objects identifying them as Variable Data Printing (VDP) objects and defining the location, type, color, and content of the objects based upon fields of an example VDP database.

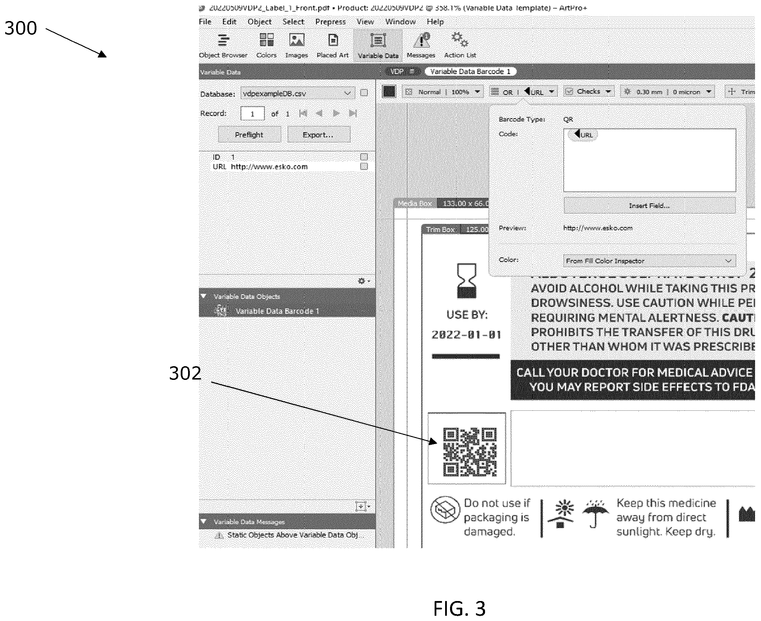

In the example depicted in FIG. 3, which depicts a user interface 300 displayed on a portion of a computer display of a user, the product design file is displayed for modification using a user interface defined by and connected to the display. Using the interface, for example, a selected QR code 302 is marked by the user as a variable barcode, with the content identified as the "URL" field of the VDP database.

Although depicted on a screen in one or more pop-up windows and fields on the user interface, the user interface is not limited to any particular design. As is well understood to those of skill in the art, the instructions provided by the user using the user interface may be provided by any user interface input devices known in the art, including one or more of: a mouse or other device for translating human motion of a hand, eye, tongue or the like to a desired location on the display, a keyboard for entering text, tabbing from defined field to defined field, or moving a visible cursor using arrow keys, a microphone and voice processor configured to translate spoken language into computer commands, a touch screen, and the like, alone or in combination, all of which are considered to be a portion of the user interface, along with the display that displays the product design and various windows, menus, buttons, and the like for manipulating the product design file in response to commands received from the user input device(s). As is known in the art, the graphics and text depicted on the display are defined by machine-readable instructions stored in machine-readable media readable by a processor connected to the display, and information defining the product design file and modifications thereto are also defined in machine-readable language, all of which machine readable language is stored in computer memory accessible by the processor.

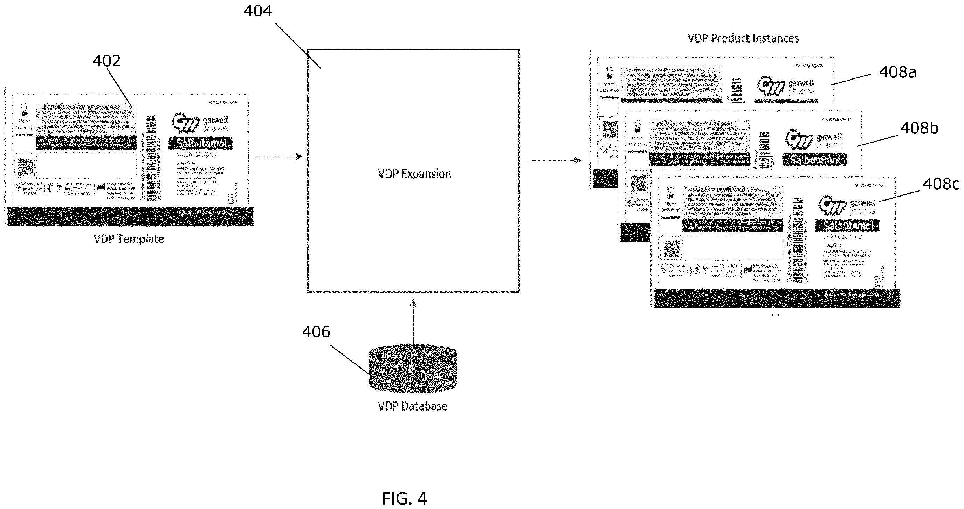

In an expansion step 404 performed by the computer processor associated with the print product design system, the VDP template 402 is combined with a production VDP database 406 (e.g. stored in computer memory of the print product design system) to generate VDP product instances 408a, 408b, 408c, as depicted in FIG. 4. Each product instance corresponds to one record in the production VDP database. For example, the QR code of a product instance will contain the URL of its record in the VDP database. In embodiments, the URL may be a unique identifier for the individual product instance in a track and trace application. In the example as depicted, the printed product instance corresponds to packaging to be associated with a unique instance of a pharmaceutical product, for which tracking and tracing may be desired for inventory control, product recalls, and the like, without limitation.

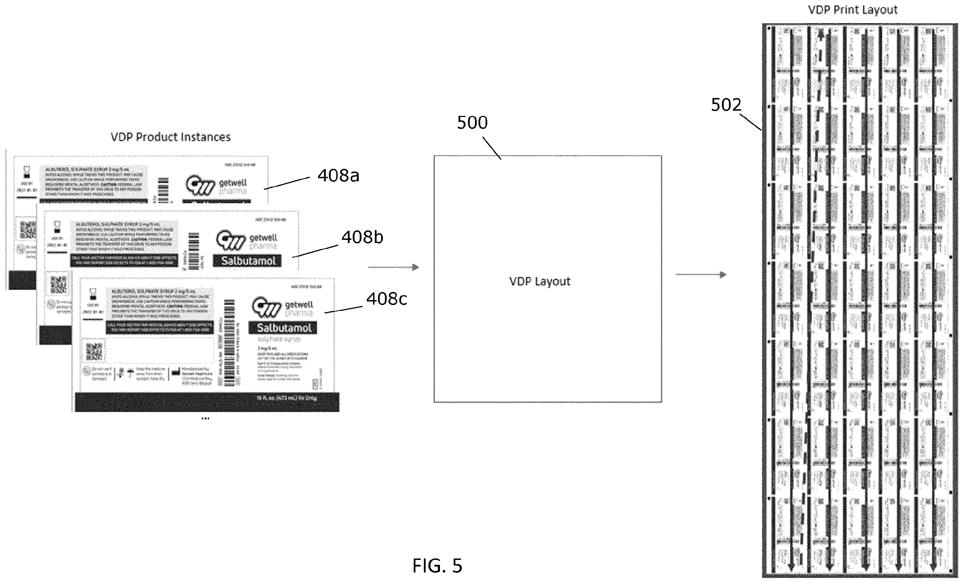

In a layout step 500, the VDP product instances 408a, 408b, 408c are placed on printing frames for printing with a digital press. This is sometimes referred to as a "step and repeat" or "imposition" step of the VDP job. In the example depicted in FIG. 5, the VDP product instances are placed in a layout 502 comprising 5 lanes (columns) using a top-down sequence within a lane (forming 7 rows per lane) and a left-right sequence between lanes. The imposition sequence is not limited to any particular format. VDP layout algorithms typically have parameters that influence sequencing, including some with options to insert empty cells or roll headers after every X products within a lane, and the like.

VDP template design is a manual action typically performed by a designer or a prepress operator. Like the design file itself, the VDP template comprises a page description language (PDL) document, such as but not limited to a PDF or a proprietary file format. VDP expansion and layout are usually automatic actions performed at production time on a workflow system or a digital front end (DFE) unit. In some systems, the VDP expansion and layout may comprise a combined step. The output of the VDP expansion and VDP Layout may be a PDF, PDF/VT, or a proprietary file format, without limitation. In some implementations, the results of these steps are never stored as a file in persistent computer memory (e.g. a hard disk), but rather are stored in the RAM of the DFE while printing.

Embodiments of the methods and systems as described herein include generating a digital package to automate the setup of the inspection system, such as on a workflow system or DFE. The digital inspection package may be generated from the printing data package or from the same input data used for generating the print data package. Thus, the inspection data are generated using the same input data as the data needed for generating the printing data, without a need for any additional manual interventions by a designer or prepress operator. The process of printing, capturing, and comparing a captured image to a digital master and designate that captured image as a master image for creating the inspection data may still be used for inspection of non-VDP areas of a job, while other algorithms as described herein (e.g. OCR, barcode reading, etc.) are used for inspection of the VDP areas. Designation of the VDP content areas enable the use of a combination of algorithms on each image captured by the inspection system of printed instances of a print job.

Accordingly, the foregoing techniques may be used for generating an image for inspection without scanning a printed Master reference image. This is applicable both for the general use case of print jobs containing only static print, and for the specific case as set forth herein, of jobs comprising both static and VDP content.

Embodiments may include a series of steps of an automatically executed workflow without human interaction as described below. In embodiments, the inputs for the workflow include: the VDP template, the VDP database, a layout specification (i.e. step and repeat parameters, a sequencing specification of database instances in the layout, and a specification of blocks and empty cells or roll headers between blocks. Not all of the aforementioned elements are present in every embodiment; in at least some embodiments, at least some of the elements in the list above are optional. In a minimalistic implementation, the input element may consist only of the VDP template, such as in implementations in which the VDP is not derived from a database, but rather based upon information generated by an external source (e.g. time of day) or a counter that sequentially increments number generated on the fly.

Solutions as described herein are not limited to a single VDP template. Multiple VDP templates may be created, such as for ganged jobs in which more than one product with variable data is printed in a single job (e.g. the front label of a bottle in a first number of lanes and the back label in the next number of lanes). Ganged jobs have a single set of inputs per product with VDP. For ganged jobs the solution is also not limited to products with VDP. The ganged job may have a combination of static products and products with VDP data. VDP products in the ganged job would have the inputs as described herein for VDP inspection. Static products in the ganged job would have a static PDF instead of a VDP template and would have no corresponding VDP database.

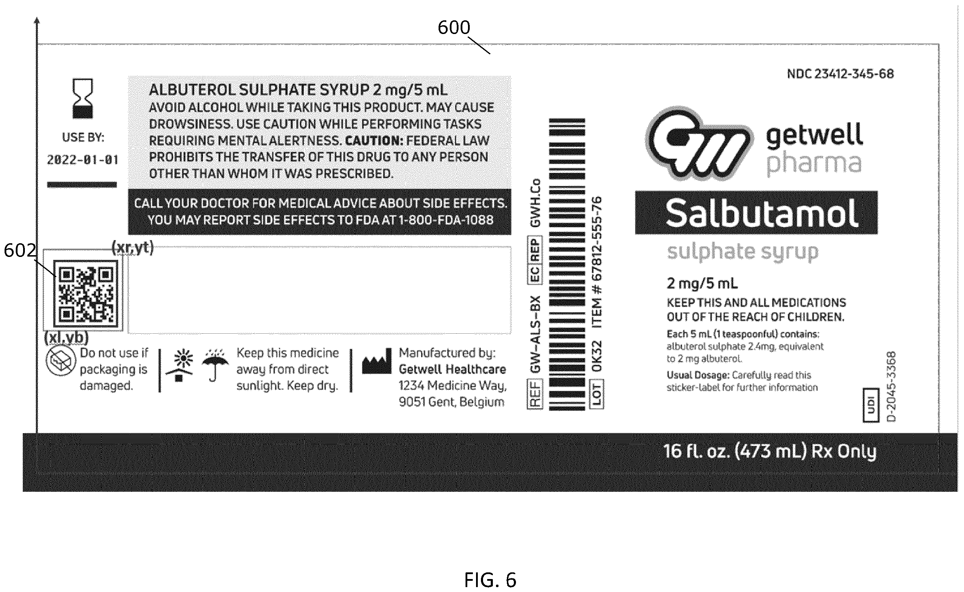

In embodiments of the invention, the VDP inspection template (for each product with VDP) is used for determining the area of the printed product that will (or may) vary from instance to instance, and optionally also the metadata of the VDP object present in that area. In a preferred embodiment, the VDP inspection template is a PDF document, but the invention is not limited to use of any particular type of PDL file. A search is performed within the PDF to find PDF objects having metadata that identifies the object as a VDP object. FIG. 6 depicts a template 600 showing bounding box 602 a rectangular shape defined by left (I), right (r), top (t), and bottom (b) coordinates (xl, yb) and (xr,yt). The coordinates may be expressed in any coordinate system known in the art, and the bounding box may be defined in raster or vector coordinates. The bounding box of the PDF object corresponding to the VDP object is thus identified as an area that will vary from copy to copy. Additionally, the VDP object may be marked in the database with metadata identifying the object as, e.g., a code, text, image, or the like, and rules that define color and content of the VDP object as compared to the field. Although depicted as a rectangular area, the geometry of bounding box is not limited to any particular geometry, and may include regular or irregular geometries.

Using the information in the VDP inspection template, a data package is generated comprising the inspection data for each printed product with VDP, such that each product in the package includes the information about all areas that will vary from copy to copy. The areas may be identified by coordinates and optional VDP object metadata related to each area. Optionally, one or more VDP databases, a layout specification, a sequencing specification, a specification of blocks and empty cells or roll headers between blocks are included in the data package. The data package is used by the visual inspection system. The data package may be in any format readable by the inspection system but will be based upon the information defined in the modified product design file as defined by template 602 and the imposition information as defined by layout 502, so that the inspection system can locate the VDP-containing areas and differentiate from areas that do not contain VDP. Specifically, the imposition information is sufficient to specify which combination of static data and variable data should be expected to arrive on which position of which copy/instance coming out of the printing unit. This means that the inspection system has adequate information to predict the expected sequence of each lane, which may be different from the sequence in the database. The visual inspection system loads the data package in preparation for commencing inspection of the print job including the VDP. In a preferred embodiment, the data package is sent via an HTTP webservice to the camera system. In an alternative embodiment, an operator may manually select the package from a computer file system and load it into the camera system.

During the inspection sequence, the camera system uses the data from the data package to implement different inspection protocols in the VDP areas and non-VDP ("static") areas. In a simplest implementation, the inspection system may ignore areas with VDP objects (i.e. implement a null inspection algorithm) and only inspect the static areas of the printed product (e.g. using a defined first inspection algorithm). In other implementations, the inspection system may use algorithms that facilitate inspection of the VDP area, for example, using the metadata about the VDP objects in each area, the VDP database, layout specification, and other aspects of the data package as described above. For example, where the data package contains a specification of the layout (sequencing, empty cells every X instances in a lane, etc.) and the production database, using this layout and production information, the inspection system can check the variable content in each printed instance against the stored metadata to confirm it meets the intentions of the print buyer. For example, the inspection system may be configured with modules that implement optical character recognition (OCR) to confirm the correctness of text content, a color measurement device, such as but not limited to a colorimeter or a spectrophotometer, to confirm the color is correct, and/or a code reader to confirm the code corresponds to the metadata expected to be represented by the code. Image matching algorithms may be used for comparing image content against expected image content (for example, stored renderings of alphanumeric characters in an expected font may be used for comparison to the printed text to ensure that the font as printed is correct and printed without defects in the characters as printed).

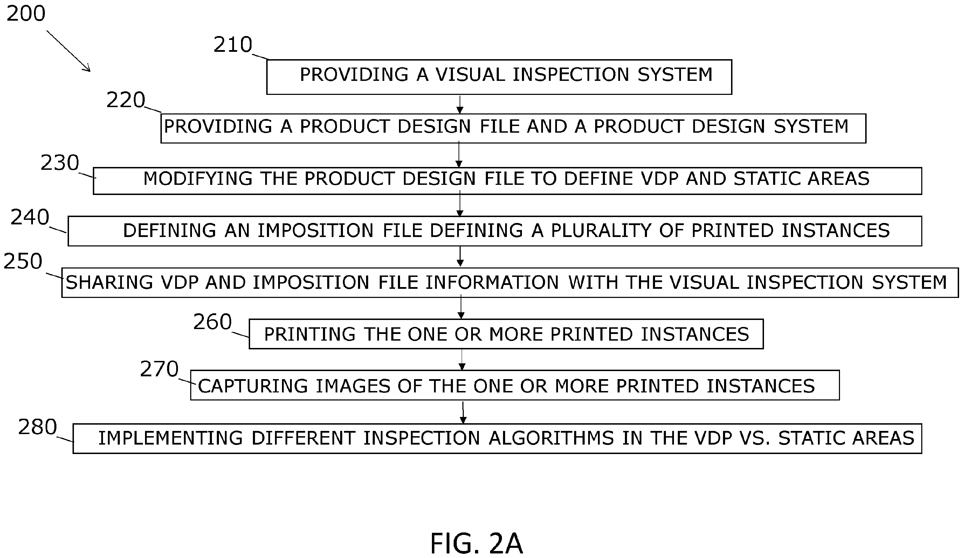

Thus, in summary, aspects of the invention relate to method 200 as depicted in fig. 2A. Step 210 includes providing a visual inspection system and step 220 includes providing a product design file and a computerized product design system configured for manipulating the product design file. In step 230, the product design file is modified as described herein to define VDP and static areas. Step 240 comprises optionally defining an imposition specification (i.e. a description of the imposition -- e.g. a step and repeat layout -- such as in XML format) defining a layout of the plurality of printed instances. Step 250 includes sharing the VDP and, optionally, the imposition specification information with the visual inspection system. In another step, not shown, the imposition specification is shared with the printer, which then proceeds with step 260 of printing the one or more printed instances as defined by the imposition specification. Notably, while it may be beneficial to send imposition information to the inspection system, certain inspection systems may be configured to detect the imposition without receiving such information (e.g. using image recognition algorithms). In step 270, the inspection system captures images of the one or more printed instances, and the processor of the inspection system then executes step 280 of implementing different inspection algorithms in the VDP vs. static areas.

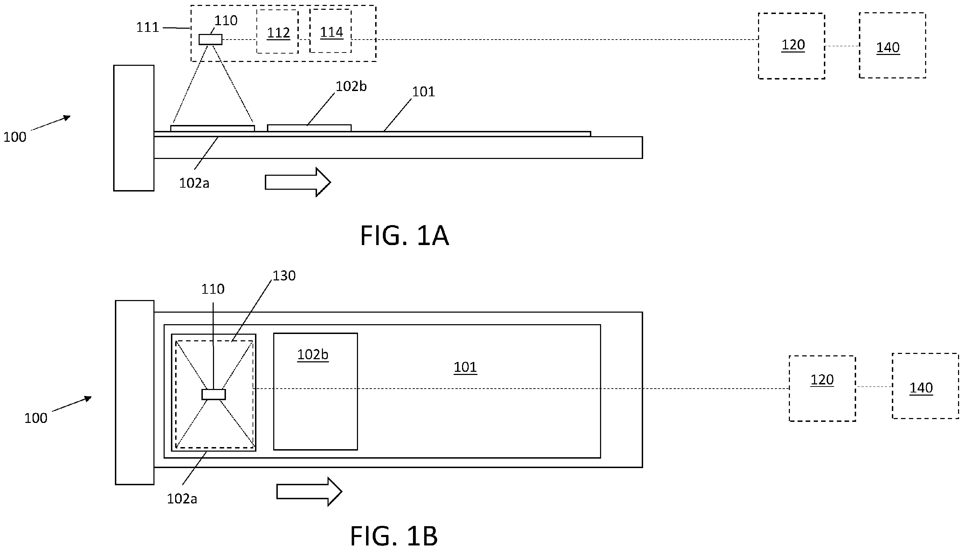

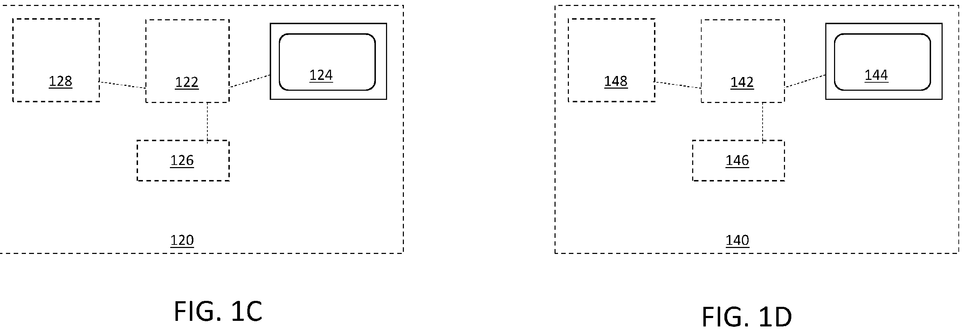

FIGS. 1A - 1D illustrate an exemplary system for implementation of the methods as described herein, comprising printing production line 100 configured to produce instances 102a, 102b of a printed product printed by a printing system 105. As depicted in FIGS. 1A and 1B, the instances may comprise printed portions of a continuous web 101, which web may be cut into individual boxes, bags, labels, or the like, in a later process step. It should be understood, however, that the invention is not limited to any specific format of printed product, which may include printed images printed on a continuous web, on discrete sheets, or on physical objects, such as beverage cans.

Machine vision system 111 is configured to capture a plurality of quality control images 112 of instances 102a, 102b. Machine vision system may include an image capture device, such as a camera 110, disposed in a position (such as above an output of the production line 100, as depicted in FIGS. 1A and 1B) to capture an image 130 of each product instance, a processor 112 for processing the image, and computer memory 114 for storing the captured image. Computerized inspection system 120 is connected to machine vision system 111, and includes processor 122 as well as display 124, user interface input device 126 (as discussed herein above), and computer memory 128, all connected to the computer processor 122. Computerized inspection system 120 is the portion of the inspection system that runs algorithms for comparing the captured images of the printed product to the modified product design file, in accordance with the expected locations of the instances of the printed product as defined by the imposition file.

Computerized print product design system, also referred to herein as a "design computer" 140 is connected to the computer inspection system, and also includes processor 142 as well as display 144, user interface input device 146 (which may include any of the user interface input devices as discussed herein in connection with the computerized print product design system), and computer memory 148. Although depicted with the respective processors and memories of machine vision system 111, computerized visual inspection system 120, and computerized print product design system 140 as separate components, these components may be incorporated into a single systems or fewer than the number of discrete systems shown, with one or more shared components. It should be noted that while depicted with a single processor, display, user interface input device, and memory for illustration only, all of the foregoing may comprise one or more than one such element.

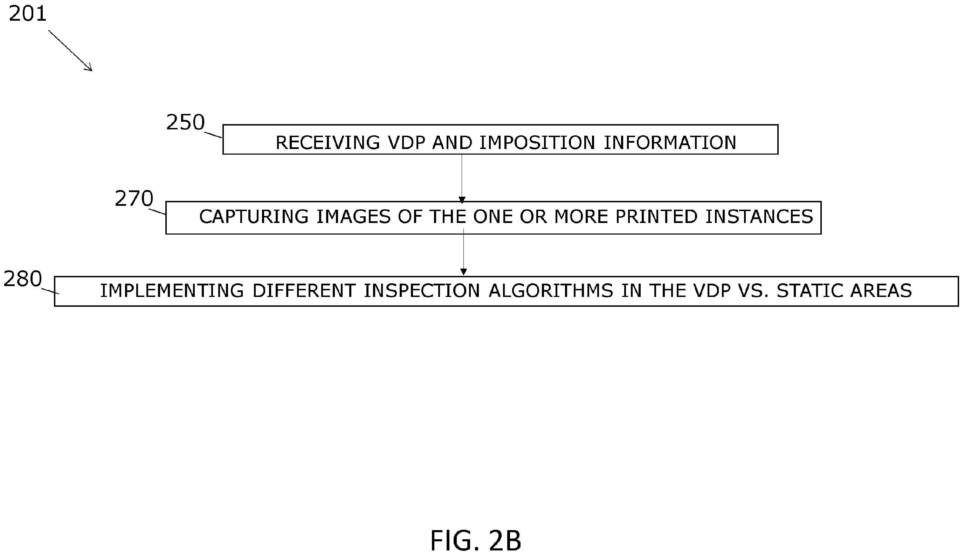

Computer memory 128 contains machine readable instructions executable by processor 122 for causing the computerized inspection system to perform method portions 201 of FIG. 2B. In step 250, the computerized inspection system receives (and stores) the data package corresponding to the information defined by the modified product design file with respect to the marked VDP and static areas and (optionally) the imposition file with respect to the location of the one or more printed instances printed by the printer. In step 270, the computerized inspection system captures images of the one or more printed instances. In step 280, the computerized inspection system implements different inspection algorithms in the VDP areas as compared to the static areas (which may include no inspection algorithm performed in the VDP area). The invention is not limited by any particular arrangement or connectivity of the display, user interface input devices, and connection to the computerized inspection system 120, or to any presence or absence of other components in the system.

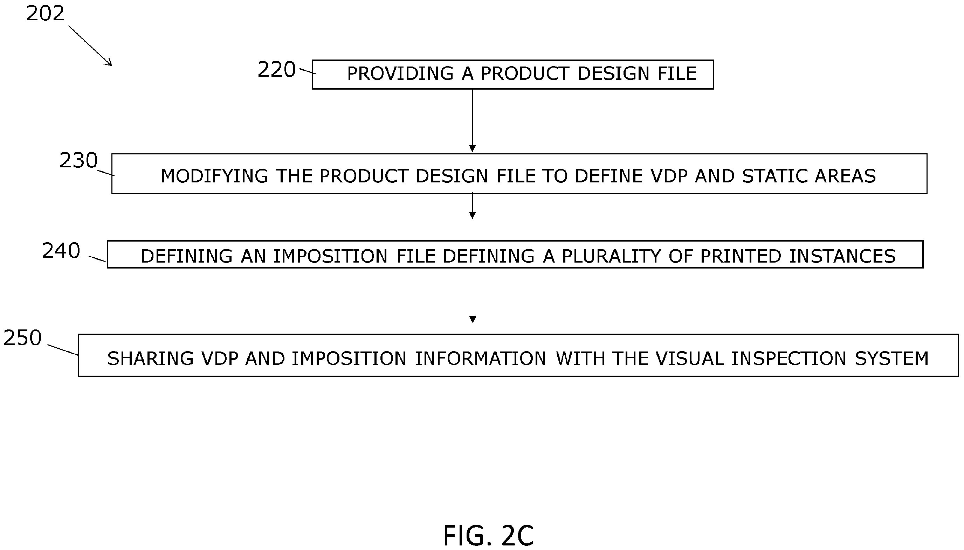

Computer memory 148 contains machine readable instructions executable by processor 142 for causing the computerized print product design system to perform method portions 202 of FIG. 2C. Method portions 202 include step 220 of providing the product design file (e.g. accessing the product design file with the computerized print product design system from connected memory), step 230 of modifying the product design file to define VDP and static areas, step 240 of (optionally) defining an imposition file defining a plurality of printed instances, and step 250 of sharing the data package containing information based upon the product design file and, optionally, the imposition file usable by the visual inspection system for differentiating VDP from static areas within the captured images. As is known in the art, the computerized print product design system may also be configured to send the product design file (or imposition file based upon the product design file) to a raster image processing (RIP) system associated with a printer for converting the product design file or imposition file information into information usable by the printing system for disposing ink on the substrate material to form the printed product in accordance with the information stored in the product design file or imposition file as generated from the product design file and any VDP content associated therewith.

Notably, some printing systems print static content using a first printing system (e.g. a flexographic, offset, lithographic printing press using printing plates or screen printing) and VDP content using a second printing system (e.g. a digital inkjet printer). Such systems may be referred to as "hybrid" printing systems. Other systems may use a digital inkjet printer to print both static and VDP content. Substantial time delays (and even geographic dislocations) may be imposed between printing the static and VDP content in hybrid systems. The methods and systems herein are not intended to be limited to any particular printing system or types of printing devices for creating the static and VDP content. Typically, inspection is performed on the final printed result with all static and VDP contents printed. In some implementations, a static shell may be printed (e.g. using flexo plates) in large quantities (e.g. rolls of labels) and the static printed product may be stored (e.g. in a warehouse), to be pulled from the warehouse later for printing digital (e.g. VDP) content on top of the static shell in short runs. In such instances, inspection may be performed on the final result (having both static and VDP content) after digital printing, or inspection of only the static printed content may be performed on the flexo-printed units to avoid damaged product being used on further expensive production steps and to ensure that the stored product is ready to receive VDP content when needed. Accordingly, implementations may include the steps of printing and inspecting static content temporally and/or geographically removed from the steps of printing and inspection of VDP content.

The computer systems described throughout the specification include but are not limited to processors (e.g. CPU) for performing algorithms, memory for storing data and programming instructions for supporting the operation of processor, user input/output (e.g. buttons, switches, display screens, etc.) for receiving instructions from the user and providing feedback to the user, printer (e.g. proofer, digital printer, etc.) for printing the printed product instances, camera or other image capture device, and any transceivers (e.g. wired, wireless, Bluetooth, WiFi, etc.) for communication between the devices. It should be understood that such processors may comprise processors housed on local (i.e. desktop, handheld, tablet, or the like) computers, remote (i.e. in "the cloud") servers, or any combination thereof, and that the communications between or among devices may include communications via local and/or global communications networks using any form of communications connectivity known in the art or later discovered. Furthermore, it should be understood that the processors, machine-readable language, and memory may be distributed between a first portion that resides on a local computer (including on a handheld computer, such as a tablet or mobile phone) and a second portion that resides on a server, with application processing interfaces (APIs) disposed therebetween to share the processing in accordance with the programming architecture, which is not limited to any particular architecture.

Machine-readable instructions, programming, or software application(s) as described herein may be embodied software or firmware used to implement the device functions associated with the device such as the cameras, printers and computers described throughout this description. Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the computer tasked with performing the respective steps as discussed herein.

Of course, other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

It should be understood that all of the figures as shown herein depict only certain elements of an exemplary system, and other systems and methods may also be used. Furthermore, even the exemplary systems may comprise additional components not expressly depicted or explained, as will be understood by those of skill in the art. Accordingly, some embodiments may include additional elements not depicted in the figures or discussed herein and/or may omit elements depicted and/or discussed that are not essential for that embodiment. In still other embodiments, elements with similar function may substitute for elements depicted and discussed herein.

Any of the steps or functionality of the system and method for converting the product design files and corresponding imposition file for printing can be embodied in programming or one more applications well known in the art, which may include a conversion of PDF (or other consolidated file embodying the design, metadata, and instructions as defined herein) to instructions executable by a printer using a raster image processor (RIP). According to some embodiments, "function," "functions," "application," "applications," "instruction," "instructions," or "programming" are program(s) that execute functions defined in the programs. Various programming languages may be employed to create one or more of the applications, structured in a variety of manners, such as object-oriented programming languages (e.g., Objective-C, Java, or C++), procedural programming languages (e.g., C or assembly language), or firmware. In a specific example, a third party application (e.g., an application developed using the ANDROID^{™} or IOS^{™} software development kit (SDK) by an entity other than the vendor of the particular platform) may be device software running on a device operating system such as IOS^{™}, ANDROID^{™}, WINDOWS^{®}, or another operating systems. In this example, the third party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer(s) or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," "includes," "including," or any other variation thereof, are intended to cover a non-exclusive inclusion, such that a process, method, article, or apparatus that has, comprises or includes a list of elements or steps does not include only those elements or steps but may include other elements or steps not expressly listed or inherent to such process, method, article, or apparatus. An element preceded by "a" or "an" does not, without further constraints, preclude the existence of additional identical elements in the process, method, article, or apparatus that comprises the element.

Unless otherwise stated, any and all measurements, values, ratings, positions, magnitudes, sizes, and other specifications that are set forth in this specification, including in the claims that follow, are approximate, not exact. Such amounts are intended to have a reasonable range that is consistent with the functions to which they relate and with what is customary in the art to which they pertain. For example, unless expressly stated otherwise, a parameter value or the like, whether or not qualified by a term of degree (e.g. approximate, substantially or about), may vary by as much as ± 10% from the recited amount.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected may lie in less than all features of any single disclosed example. Hence, the following claims are hereby incorporated into the Detailed Description, with each claim standing on its own as a separately claimed subject matter.

Aspects of the invention include methods and systems for visually inspecting with a visual inspection system a printed product containing variable data printing (VDP) content printed by a printing system as part of a print job and non-transitory computer memory media comprising machine-readable instructions for causing a print product design system, printing system, and/or inspection system to operatively interact with one another to perform the method.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A method for visually inspecting with a visual inspection system a printed product containing variable data printing (VDP) content printed by a printing system as part of a print job, the method comprising:
a) providing a computerized print product design system comprising at least a design computer processor, computer memory connected to and readable by the design computer processor, a user interface, and a communications connection to the visual inspection system and the printing system;
b) providing a computer-readable print product design file in a page description language, stored in the computer memory, containing information defining the printed product;
c) modifying, using the user interface of the computerized print product design system, the product design file to define at least one VDP template defining at least one VDP area containing VDP content comprising at least one VDP object and at least one static area not containing any VDP content, the modification including adding metadata to the at least one VDP object defining at least a location, size, and VDP object type;
d) storing, in the computer memory of the computerized print product design system, the modified product design file identifying the at least one VDP area and the at least one static area; and
e) with the print product design system, generating and sending, an inspection data package comprising information corresponding to the modified product design file to the visual inspection system and storing the inspection data package in the computer memory of the visual inspection system, the data package including data usable by the visual inspection system for locating and inspecting the at least one VDP area in each of the plurality of printed instances.

2. The method of claim 1, further comprising the steps of:
f) providing the printing system in communication with the design computer processor or a raster image processor (RIP) system configured to convert information in the modified design file to information readable by a controller of the printing system, the printing system configured to deposit ink in one or more desired patterns on a substrate material;
g) with the print product design system, generating and sending a printing data package corresponding to the modified product design file to the printing system; and
h) with the printing system, printing the printing job comprising a plurality of printed instances of the printed product on the substrate material in accordance with the printing data package.

3. The method of claim 2, further comprising the steps of:
i) providing the visual inspection system in communication with the design computer, the visual inspection system comprising at least a camera, an inspection computer processor, and computer memory connected to and readable by the inspection computer processor, the visual inspection system disposed for capturing one or more images of a plurality of printed instances of the printed product printed by the printer;
j) configuring the visual inspection system to capture the one or more images of the plurality of printed instances of the printed product as printed by the printing system and implementing an inspection algorithm in the at least one VDP area that is different from an inspection algorithm implemented in the at least one static area;
k) with the visual inspection system, capturing the one or more images of the plurality of printed instances of the printed product as printed by the printing system; and
l) with the visual inspection system, receiving the inspection data package from the print product design system, and implementing the inspection algorithm in the at least one VDP area.

4. The method of any one of claims 1-3, wherein the at least one inspection algorithm in the at least one VDP area includes at least one inspection parameter based upon the metadata,
optionally wherein the metadata further includes information selected from the group consisting of one or more rules defining color of the at least one VDP area, and one or more rules defining content of the at least one VDP area.

5. The method of claim 1, wherein the design file comprises a PDF and the step of modifying the design file comprises inserting a PDF object corresponding to the at least one VDP area.

6. The method of any one of the foregoing claims, further comprising creating an imposition specification defining a print layout comprising the plurality of printed instances and sending the imposition specification to the visual inspection system and to the printing system.

7. The method of any one of the foregoing claims, wherein the data package further comprises one or more of: at least one VDP database or one or more pointe to one or more records stored in at least one VDP database, a layout specification, a sequencing specification, and a specification of blocks and empty cells or roll headers between blocks.

8. The method of any one of the foregoing claims, wherein the data package corresponds to a plurality of VDP inspection templates, optionally wherein the print job comprises a ganged job, optionally wherein the print job comprises a ganged job comprising at least one VDP product and at least one static product.

9. The method of any one of the foregoing claims, wherein the printing system comprises a hybrid printing system comprising a first printing system component for printing the static content and a second printing system component for printing the VDP content.

10. The method of any one of the foregoing claims, wherein at least step e) is performed without any human intervention.

11. The method of any one of claims 3-10, wherein the second inspection algorithm is performed without reference to a captured master image.

12. A system for visually inspecting a printed product containing variable data printing (VDP) content, the system comprising:
a) a printing system configured to print a plurality of instances of the printed product, each instance containing at least one area of the VDP content;
b) a visual print inspection system comprising at least one camera positioned to capture an image of each instance of the printed product, and at least one inspection computer processor connected to inspection computer memory and the print inspection system; and
c) instructions stored in the inspection computer memory media comprising information defining at least one VDP area of the printed product containing VDP content and at least one static area of the printed product not containing VDP content, the information defining the at least one VDP area defining at least one VDP object and metadata defining at least a location, size, and type of the VDP object, the information derived from a inspection data package based upon a product design file defining the at least one VDP area including the at least one VDP object, the at least one static area, and the metadata, the at least one inspection computer processor configured to implement a first inspection algorithm in the at least one static area and implement a second inspection algorithm in the at least one VDP area, optionally wherein the instructions for implementing the second inspection algorithm include instructions based upon the defined metadata.

13. The system of claim 12, further comprising at least one design computer processor in communication with the at least one inspection computer processor, the at least one design computer processor connected to a user interface and design computer memory media having machine-readable instructions stored therein for modifying a computer-readable product design file in accordance with commands received from the user interface, the computer-readable product design file comprising a file in a page description language (PDL) defining the printed product, the instructions for modifying including instructions for defining the at least one VDP area, the at least one static area, and the metadata associated with the at least one VDP area, the at least one design computer processor configured to generate and send the inspection data package to the inspection computer processor corresponding to the modified product design file.

14. Non-transitory computer memory media comprising machine-readable instructions readable by a processor associated with a print product inspection system, the instructions configured to cause the print product inspection system to:
a) receive a data package comprising information corresponding to a print product design file usable by the visual inspection system for locating at least one variable data printing (VDP) area containing at least one VDP object and at least one static printed area in one or more captured images of each of the plurality of printed instances, the data package including metadata identifying at least a location, size, and VDP object type;
b) configure the visual inspection system to capture the one or more images of the plurality of printed instances of the printed product as printed by the printer and implement a first inspection algorithm in the at least one static area and a second inspection algorithm in the at least one VDP area;
c) capture the one or more images of each of the plurality of printed instances of the printed product in a workflow of printed output from a printer; and
d) implement the first inspection algorithm in the at least one static area and implement the second inspection algorithm in the at least one VDP area.

15. Non-transitory computer memory media comprising machine-readable instructions readable by a processor associated with a computerized print product design system, the instructions configured to cause the print product design system to:
a) receive a product design file in a page description language (PDL);
b) modify the product design file to define at least one variable data printing (VDP) area containing VDP content comprising at least one VDP object and at least one static area not containing VDP content, and to add metadata including information defining at least a location, size, and VDP object type, thereby creating a modified product design file;
c) optionally, creating an imposition file defining a print layout comprising a plurality of printed instances of the product design file comprising the VDP content;
d) sending a data package comprising information corresponding to the modified product design file, and optionally the imposition file, to the visual inspection system, the data package usable by the visual inspection system for locating the at least one VDP area in each of the plurality of printed instances;
optionally, wherein machine-readable instructions further comprise instructions for causing the computerized print product design system to send the product design file or imposition file to a printer or to a raster image processor (RIP) connected to the printer.
